# EUROPÄISCHE PATENTANMELDUNG

(11) **EP 0 820 881 A2**
(43) Veröffentlichungstag der Anmeldung: **28.01.1998**
(21) Anmeldenummer: 97109223.4
(22) Anmeldetag: 06.06.1997
(51) Int. Cl.: B60B 33/00

(54) **Lenkrollenanordnung**

(30) Priorität: 24.07.1996 DE 19629912
(71) Anmelder: MAQUET Aktiengesellschaft, 76437 Rastatt (DE)
(72) Erfinder: Dornauer, Matthias, 76316 Malsch (DE); Olszewski, Jan Donat, 76189 Karlsruhe (DE)
(74) Vertreter: Schaumburg, Thoenes, Thurn Patentanwälte

(57) **Zusammenfassung**

Bei einer Lenkrollenanordnung für Transportwagen, Möbel und dergleichen mit einer Rolle (10) und einem Rollenhalter (14), an dem die Rolle (10) um eine Rollenachse (12) frei drehbar gelagert ist und der seinerseits an einem Basiselement (18) um eine zur Rollenachse (12) senkrechte Lenkachse (16) drehbar gelagert ist, wobei Rollenachse (12) und Lenkachse (16) einen Abstand (a) voneinander haben ist das Basiselement (18) an einem Lagerteil (22) um eine zur Lenkachse (16) senkrechte Kippachse (24) schwenkbar gelagert, so daß es zwischen einer Normalstellung, in der die Lenkachse (16) senkrecht zur Auflagefläche (32) der Rolle gerichtet ist, und einer Kippstellung verstellbar ist, wobei das Basiselement (18) in seine Normalstellung vorgespannt ist.

## Beschreibung

Die Erfindung betrifft eine Lenkrollenanordnung für Transportwagen, Möbel und dergleichen mit einer Rolle und einem Rollenhalter, an dem die Rolle um eine Rollenachse frei drehbar gelagert ist und der seinerseits an einem Basiselement um eine zur Rollenachse senkrechte Lenkachse drehbar gelagert ist, wobei Rollenachse und Lenkachse einen Abstand voneinander haben.

Transporteinrichtungen oder mobile Möbelstücke, die mit Lenkrollen dieser Art ausgestattet sind, können bequem in alle Richtungen verschoben werden, wobei auch ein leichter Richtungswechsel bei der Bewegung möglich ist. Die Kehrseite dieser hohen Beweglichkeit ist aber auch, daß ein Transportfahrzeug nur mit Schwierigkeit quer zu einer abschüssigen Fläche bewegt werden kann, da sich die Rollen sofort in Neigungsrichtung der Auflagefläche einstellen. Bei schweren Gegenständen oder hochbeladenen Transportfahrzeugen sind daher unter Umständen erhebliche Kräfte erforderlich, um das Fahrzeug in einer bestimmten Richtung zu halten. Es ist zwar bekannt, Lenkrollen der eingangs genannten Art für den Lauf in einer bestimmten Richtung form- und/oder kraftschlüssig zu fixieren, jedoch ist hierzu jeweils ein Schaltvorgang erforderlich.

Der Erfindung liegt die Aufgabe zugrunde, eine Lenkrollenanordnung der eingangs genannten Art anzugeben, die vorzugsweise in einer definierten Stellung läuft, aber auch in jede andere Richtung ohne manuellen Schaltvorgang drehbar ist.

Diese Aufgabe wird erfindungsgemäß dadurch gelöst, daß das Basiselement an einem Lagerteil um eine zur Lenkachse senkrechte Kippachse schwenkbar gelagert ist, so daß es zwischen einer Normalstellung, in der die Lenkachse senkrecht zur Auflagefläche der Rolle gerichtet ist, und einer Kippstellung verstellbar ist, und daß das Basiselement in seine Normalstellung vorgespannt ist.

Ein Verschwenken des Basiselementes bewirkt eine Schrägstellung der Lenkachse, wodurch sich die Rolle selbsttätig so stellt, daß die Rollenachse senkrecht zur Schwenkebene verläuft. Die Schwenkebene bestimmt somit die Lage der Vorzugsfahrtrichtung. Da die definierte Richtungsposition in einer Energiesenke liegt, erfolgt die Einstellung der Rolle selbsttätig ohne einen manuellen Eingriff. Der Betrag des Schwenkwinkels wird durch die Belastung der Rolle bestimmt, so daß die Höhe der Richtungsstabilität proportional dem jeweiligen Bedarf ist. Dennoch bleibt eine leichte Lenkbarkeit bei geringer Last erhalten. Über den gesamten Lenkbereich ergibt sich eine gleichmäßige Flächenpressung der Lauffläche, d.h. die Rollen laufen nicht einseitig auf einer Kante.

Vorzugsweise ist das Lagerteil von einer Lagergabel gebildet, die mit einer Befestigungsplatte, einem Fahrgestell oder dergleichen verbunden ist. Das heißt, die Lenkrollenanordnung kann eine Befestigungsplatte haben, mit der sie an dem zu transportierenden Gegenstand befestigt wird. Die Lagergabel kann aber auch direkt an einem Fahrgestell des zu transportierenden Gegenstandes angeordnet sein.

Vorzugsweise ist die Anordnung so getroffen, daß die Kippachse und die Lenkachse sich schneiden. Das Basiselement kann von einem länglichen Träger gebildet sein, in dem nahe seinem einen Längsende die Lager für die Lenkachse und die Kippachse ausgebildet sind, während nahe dem anderen Ende eine Feder angreift, welche das Basiselement in seine Normalstellung vorspannt, so daß in unbelastetem Zustand die Lenkachse senkrecht zur Auflagefläche der Rolle gerichtet ist. Die erfindungsgemäße Lenkrollenanordnung kann für Transporteinrichtungen aller Art mit mindestens drei Lenkrollen verwendet werden, von denen mindestens eine Lenkrolle in der erfindungsgemäßen Weise schwenkbar gelagert ist, so daß eine Vorzugsfahrtrichtung selbsttätig und automatisch ohne Verlust der vollen Lenkbarkeit und ohne Schaltvorgang erreicht wird. Insbesondere ist die erfindungsgemäße Lenkrollenanordnung für Operationstisch-Transporter und mobile Operationstische bestimmt.

Weitere Merkmale und Vorteile der Erfindung ergeben sich aus der folgenden Beschreibung, welche in Verbindung mit dem beigefügten Zeichnungen die Erfindung anhand eines Ausführungsbeispieles erläutert. Es zeigen:
- Figur 1: eine teilweise schematische perspektivische Ansicht einer erfindungsgemäßen Lenkrollenanordnung,
- Figur 2: eine Seitenansicht der erfindungsgemäßen Lenkrollenanordnung in ihrer Normalstellung und
- Figur 3: eine Seitenansicht der erfindungsgemäßen Lenkrollenanordnung in ihrer Kippstellung.

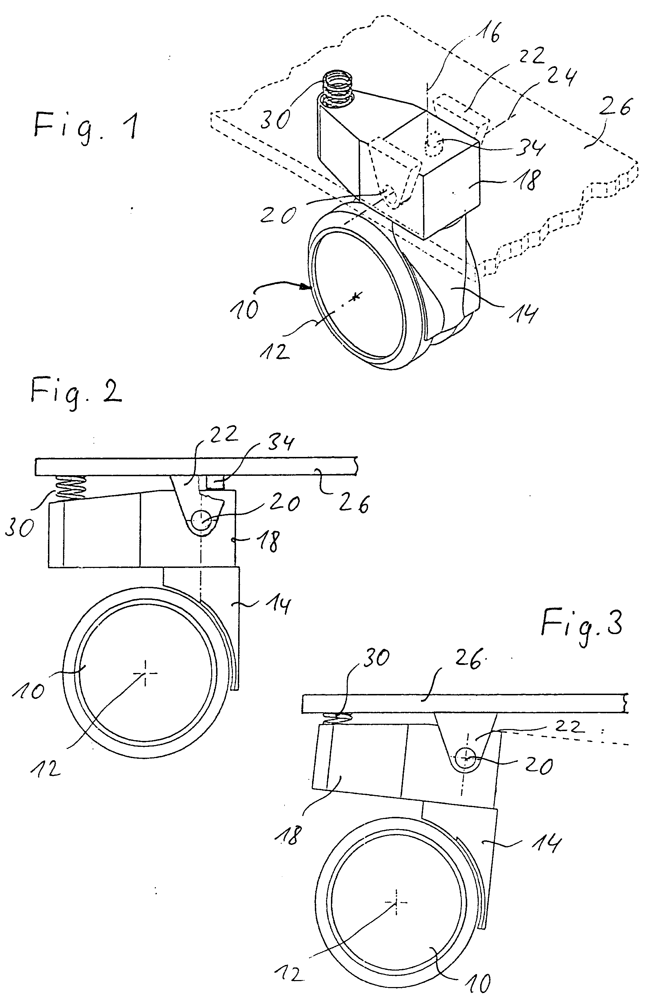

Die in den Figuren 1 bis 3 dargestellte Lenkrollenanordnung umfaßt eine Doppelrolle 10, die um eine Achse 12 drehbar an einem Rollenhalter 14 gelagert ist. Der Rollenhalter 14 ist um eine zur Rollenachse 12 senkrechte Lenkachse 16 an einem Basiselement 18 drehbar gelagert, wobei die Lenkachse 16 und die Rollenachse 12 einen in Figur 3 eingezeichneten Abstand a voneinander haben. Die soweit beschriebene Lenkrollenanordnung ist an sich bekannt.

Das Basisteil 18 hat die Form eines länglichen quaderförmigen Trägers, der nahe seinem einen Ende ein nicht dargestelltes Lager für den Rollenhalter 14 enthält und zu seinem anderen freien Ende hin sich etwas verjüngt. An zur Lenkachse 16 parallelen Seitenflächen des Basiselementes 18 sind an diesen Lagerzapfen 20 angeordnet, mit denen das Basiselement 18 in einer Lagergabel 22 um eine Kippachse 24 schwenkbar gelagert ist. Die Lagergabel 22 ist an einer Platte 26 ausgebildet. Die Platte 26 kann eine Befestigungsplatte sein, die der Rollenanordnung zugeordnet ist. Sie kann aber auch Teil eines Fahrgestells eines Transportwagens oder des mobilen Gegenstandes sein.

Auf seiner der Platte 26 zugewandten Seite ist der sich verjüngende Abschnitt des Basiselementes 18 abgeschrägt. Zwischen der Platte 26 und der an dem Basiselement 18 ausgebildeten Schrägfläche 28 ist eine Schraubendruckfeder 30 angeordnet, welche das Basiselement 18 in die in der Figur 2 dargestellte Normalstellung vorspannt, in der die Lenkachse 16 senkrecht zur Platte 26 und zur Auflagefläche 32 der Rolle 10 gerichtet ist, wobei diese Stellung durch einen Anschlag 34 definiert wird, der die Schwenkbewegung des Basiselementes 18 relativ zu der Platte 26 begrenzt.

Die Federkraft der Feder 30 ist so gewählt, daß das Basiselement 18 ohne Belastung oder bei nur geringer Belastung der Platte 26 die in Figur 2 dargestellte Normalstellung einnimmt. Wird die Platte 26 stärker belastet, schwenkt das Basiselement 18 um die Kippachse 24 in eine Stellung, die in Figur 3 dargestellt ist. Der Schwenkwinkel ist dabei lastabhängig. Bei dieser Stellung des Basiselementes 18 und des Rollenhalters 14 schwenkt die Rolle 10 selbsttätig um die Lenkachse 16 so, daß die Rollenachse 12 senkrecht zur Schwenkebene gerichtet ist. Diese Stellung entspricht einer Energiesenke, so daß die Rolle diese Stellung selbsttätig einnimmt und beibehält, auch wenn sie in dieser Stellung nicht fixiert ist. Somit nimmt die Rolle eine belastungsabhängige Vorzugsstellung ein, welche das Verschieben des Transportwagens oder mobilen Möbelstückes in einer bestimmten Richtung erleichtert, ohne Lenkbewegungen, d.h. Richtungsänderungen zu behindern.

## Patentansprüche

1. Lenkrollenanordnung für Transportwagen, Möbel und dergleichen mit einer Rolle (10) und einem Rollenhalter (14), an dem die Rolle (10) um eine Rollenachse (12) frei drehbar gelagert ist und der seinerseits an einem Basiselement (18) um eine zur Rollenachse (12) senkrechte Lenkachse (16) drehbar gelagert ist, wobei Rollenachse (12) und Lenkachse (16) einen Abstand (a) voneinander haben, **dadurch gekennzeichnet,** daß das Basiselement (18) an einem Lagerteil (22) um eine zur Lenkachse (16) senkrechte Kippachse (24) schwenkbar gelagert ist, so daß es zwischen einer Normalstellung, in der die Lenkachse (16) senkrecht zur Auflagefläche (32) der Rolle gerichtet ist, und einer Kippstellung verstellbar ist, und daß das Basiselement (18) in seine Normalstellung vorgespannt ist.

2. Lenkrollenanordnung nach Anspruch 1, **dadurch gekennzeichnet,** daß das Lagerteil (22) von einer Lagergabel gebildet ist, die mit einer Befestigungsplatte (26), einem Fahrgestell oder dergleichen verbunden ist.

3. Lenkrollenanordnung nach Anspruch 1 oder 2, dadurch **gekennzeichnet,** daß die Kippachse (24) und die Lenkachse (16) sich schneiden.

4. Lenkrollenanordnung nach einem der Ansprüche 1 bis 3, dadurch **gekennzeichnet,** daß das Basiselement (18) von einem länglichen Träger gebildet ist, in dem nahe seinem einen Längsende die Lager für die Lenkachse (16) und die Kippachse (24) ausgebildet sind und nahe dessen anderem Ende eine Feder (30) angreift, welche das Basiselement (18) in seine Normalstellung vorspannt.
